# EUROPÄISCHE PATENTSCHRIFT

(11) **EP 3 680 463 B1**
(45) Veröffentlichungstag und Bekanntmachung des Hinweises auf die Patenterteilung: **31.03.2021**
(21) Anmeldenummer: 19216797.1
(22) Anmeldetag: 17.12.2019
(51) Int. Cl.: F01N 3/28, F01N 13/18, B01F 5/06, F01N 3/00, F01N 3/20

(54) **MISCHER FÜR EINE ABGASANLAGE EINER BRENNKRAFTMASCHINE**
MIXER FOR AN EXHAUST GAS SYSTEM OF A COMBUSTION ENGINE
MÉLANGEUR POUR UNE INSTALLATION DE GAZ D'ÉCHAPPEMENT D'UN MOTEUR À COMBUSTION INTERNE

(30) Priorität: 08.01.2019 DE 102019100267
(43) Veröffentlichungstag der Anmeldung: 15.07.2020
(73) Patentinhaber: Eberspächer Exhaust Technology GmbH, 66539 Neunkirchen (DE)
(72) Erfinder: Röhr, Benjamin, 73732 Esslingen (DE); Tchamgoue, Herve, 72574 Bad Urach (DE); Berkemer, Frank, 72800 Eningen (DE)
(74) Vertreter: Ruttensperger Lachnit Trossin Gomoll

(56) Entgegenhaltungen:
- EP-A1- 2 980 379
- EP-A1- 3 308 847
- DE-A1-102017 109 908
- DE-U1-202012 011 764

## Beschreibung

Die vorliegende Erfindung betrifft einen Mischer für eine Abgasanlage einer Brennkraftmaschine, umfassend einen Mischerkörper mit einer Mehrzahl von von einem Mischerkörperzentrum bezüglich einer Mischerlängsachse nach radial außen sich erstreckenden Strömungsablenkelementen sowie einen an den Mischerkörper radial außen anschließenden, die Mischerlängsachse ringartig umgebenden Trägerbereich.

Derartige Mischer werden in Abgasanlagen eingesetzt, um eine effiziente Durchmischung von weiter stromaufwärts in den Abgasstrom eingespritztem Reaktionsmittel, beispielsweise einer Harnstoff/Wasser-Lösung, mit dem von einer Brennkraftmaschine ausgestoßenen Abgas herbeizuführen. Durch den Trägerbereich ist der Mischerkörper bezüglich abgasführenden Komponenten der Abgasanlage so getragen, dass dessen Strömungsablenkelemente von dem in den abgasführenden Komponenten strömenden Abgas umströmt werden können und dabei die für die Durchmischung erforderliche Verwirbelung erzeugen können.

Ein Mischer gemäß dem Oberbegriff des Anspruchs 1 ist aus der DE202012011764U1 bekannt. Bei diesem bekannten Mischer erstrecken sich mehrere Strömungsablenkelemente von einem zentralen Bereich des Mischers nach radial außen zu einem ringartigen Trägerbereich. Von dem ringartigen Trägerbereich stehen nach radial außen mehrere einen Mischerverbindungsbereich bereitstellende Laschen ab. Diese sind zwischen nach radial außen greifenden Flanschbereichen zweier aneinander angrenzend zu positionierender, rohrartiger Komponenten einer Abgasanlage gehalten.

Es ist die Aufgabe der vorliegenden Erfindung, einen Mischer für eine Abgasanlage einer Brennkraftmaschine mit einem einfach zu realisierendem, gleichwohl unter den im Verbrennungsbetrieb auftretenden thermischen und mechanischen Belastungen stabilem Aufbau bereitzustellen.

Erfindungsgemäß wird diese Aufgabe gelöst durch einen Mischer für eine Abgasanlage einer Brennkraftmaschine, umfassend einen Mischerkörper mit einer Mehrzahl von von einem Mischerkörperzentrum bezüglich einer Mischerlängsachse nach radial außen sich erstreckenden Strömungsablenkelementen sowie einen an den Mischerkörper radial außen anschließenden, die Mischerlängsachse ringartig umgebenden Trägerbereich, wobei der Trägerbereich umfasst:
- einen Mischerverbindungsbereich zum Verbinden des Mischers mit einer an den Mischer angrenzend zu positionierenden Abgasanlagenkomponente,
- eine an den Mischerverbindungsbereich anschließende Rohrverbindungswand mit einer Wandinnenfläche,
- eine an den Mischerverbindungsbereich anschließende, den Mischerkörper tragende und von der Rohrverbindungswand radial außen umgebene Mischerkörper-Tragewand mit einer Wandaußenfläche,
- eine an die Wandaußenfläche und die Wandinnenfläche anschließende erste Übergangsfläche, wobei die erste Übergangsfläche zwischen der Wandinnenfläche und der Wandaußenfläche durchgehend konkav gewölbt ist und einen zwischen der Rohrverbindungswand und der Mischerkörper-Tragewand gebildeten ringartigen Rohraufnahmezwischenraum axial begrenzt.

Bei dem erfindungsgemäß aufgebauten Mischer sind die beiden eine Anbindung an den Mischerkörper einerseits und ein Abgasrohr andererseits bereitstellenden Wände so aneinander angeschlossen, dass im Übergang, also im Bereich der ersten Übergangsfläche, durch die im Wesentlichen durchgehend konkav gewölbte Ausgestaltung Ecken- oder Kantenbereiche, welche bei der unvermeidbar auftretenden thermischen Ausdehnung des Mischerkörpers einer starken mechanischen Belastung unterliegen und daher eine Tendenz zur Rissbildung zeigen, vermieden werden.

Ein auch bei thermischer Ausdehnung des Mischerkörpers das Entstehen lokal übermäßig starker Spannungen vermeidender Aufbau kann bei einer vorteilhaften Ausgestaltung beispielsweise dadurch unterstützt werden, dass ein Krümmungsradius der konkav gewölbten ersten Übergangsfläche vom Anschluss der ersten Übergangsfläche an die Wandinnenfläche zum Anschluss der ersten Übergangsfläche an die Wandaußenfläche zunimmt. Dabei kann beispielsweise vorgesehen sein, dass der Krümmungsradius stetig zunimmt, also keine Bereiche mit konstantem oder abnehmendem Krümmungsradius vorhanden sind. Alternativ ist es beispielsweise möglich, dass, ausgehend vom Anschluss an die Wandinnenfläche, zunächst ein kurzer Bereich mit abnehmendem Krümmungsradius vorhanden ist, auf welchen dann ein langer Bereich mit bis zum Anschluss an die Wandaußenfläche zunehmendem Krümmungsradius folgt. In Zwischenbereichen kann auch ein konstanter Krümmungsradius vorhanden sein.

Um eine weiter erhöhte Flexibilität im Trägerbereich bereitstellen zu können und auch eine definierte Strömungsführung in Richtung auf den Mischerkörper zu unterstützen zu können, wird vorgeschlagen, dass ein radialer Abstand der Wandaußenfläche zur Wandinnenfläche in Richtung zu einem von der ersten Übergangsfläche entfernten axial offenen Ende des Rohraufnahmezwischenraums zunimmt. Dies kann beispielsweise dadurch erreicht werden, dass die Wandinnenfläche eine Zylinderfläche ist, oder/und dass die Wandaußenfläche eine Kegelstumpffläche ist.

Im axialen Erstreckungsbereich der Wandinnenfläche kann die Rohrverbindungswand eine im Wesentlichen konstante Wanddicke aufweisen.

Für eine hohe Flexibilität der Mischerkörper-Tragewand einerseits, eine gleichwohl stabile Anbindung der Mischerkörper-Tragewand an die Rohrverbindungswand bzw. den Mischer Verbindungsbereich andererseits kann vorgesehen sein, dass die Mischerkörper-Tragewand einen an einer radialen Außenseite die Wandaußenfläche bereitstellenden ersten Tragewandbereich und einen an den ersten Tragewandbereich anschließenden und wenigstens einen Teil der ersten Übergangsfläche bereitstellenden zweiten Tragewandbereich aufweist, und dass die Mischerkörper-Tragewand im ersten Tragewandbereich eine konstante Wanddicke aufweist oder/und im zweiten Tragewandbereich eine in Richtung vom ersten Tragewandbereich weg zunehmende Wanddicke aufweist.

Eine derartige auch die Strömungsführung in Richtung auf den Mischerkörper bzw. dessen Strömungsleitelemente zu unterstützende Struktur kann beispielsweise dadurch erreicht werden, dass die Mischerkörper-Tragewand im zweiten Tragewandbereich an ihrer von der ersten Übergangsfläche abgewandten Seite eine an eine Innenumfangsfläche des Mischerverbindungsbereichs und eine Innenumfangsfläche des ersten Tragewandbereichs anschließende zweite Übergangsfläche aufweist, und dass die zweite Übergangsfläche in ihrem Erstreckungsbereich zwischen der Innenumfangsfläche des Mischerverbindungsbereichs und der Innenumfangsfläche des ersten Tragewandbereichs keine zur Mischerlängsachse parallele Flächennormale aufweist oder/und ein Radialabstand der zweiten Übergangsfläche zur Mischerlängsachse in ihrem Erstreckungsbereich zwischen der Innenumfangsfläche des Mischerverbindungsbereichs und der Innenumfangsfläche des ersten Tragewandbereichs stufenlos abnimmt oder/und ein Radialabstand der Innenumfangsfläche des ersten Tragewandbereichs zur Mischerlängsachse axial in Richtung von der zweiten Übergangsfläche weg abnimmt.

Dabei kann beispielsweise vorgesehen sein, dass die Innenumfangsfläche des Mischerverbindungsbereichs eine Zylinderfläche ist, oder/und dass Innenumfangsfläche des Mischerverbindungsbereichs und die Wandinnenfläche zueinander radial versetzt angeordnet sind, oder/und dass die Innenumfangsfläche des ersten Tragewandbereichs eine Kegelstumpffläche ist.

Für eine stabile und einfach zu realisierende Verbindung des erfindungsgemäß aufgebauten Mischers mit einer insbesondere stromaufwärts in einer Abgasanlage daran anschließenden Abgasanlagenkomponente kann weiter vorgesehen sein, dass der Mischerverbindungsbereich einen nach radial außen über die Rohrverbindungswand vorspringenden Verbindungsflansch mit einer im Wesentlichen axial orientierten Anlagefläche zur Anlage einer angrenzend an den Mischer zu positionierenden Abgasanlagenkomponente aufweist. Bei derartiger Ausgestaltung kann der Mischerverbindungsbereich beispielsweise unter Einsatz einer diesen und einen komplementären Verbindungsbereich einer Abgasanlagenkomponente umgebenden Rohrschelle oder dergleichen mit der Abgasanlagenkomponente gasdicht verbunden werden.

Die bauliche Ausgestaltung des erfindungsgemäß aufgebauten Mischers ermöglicht es, dass der Trägerbereich mit seinem Mischerverbindungsbereich, seiner Rohrverbindungswand und seiner Mischerkörper-Tragewand und der Mischerkörper mit seinem Mischerkörperzentrum und seinen Strömungsablenkelementen als integrales Metallgussteil ausgebildet werden können.

Um bei einer durch Umströmung mit Abgas herbeigeführten thermischen Ausdehnung des Mischerkörpers die Flexibilität des Trägerbereichs insbesondere im Bereich der Mischerkörper-Tragewand effizient ausnutzen zu können, wird weiter vorgeschlagen, dass wenigstens ein Teil der, vorzugsweise alle Strömungsablenkelemente mit axialem Abstand zur ersten Übergangsfläche an die Mischerkörper-Tragewand anschließen.

Ein auch unter thermischer Belastung zu geringen Spannungen führender Aufbau kann ferner dadurch erreicht werden, dass ein Übergang der ersten Übergangsfläche in die Wandinnenfläche und ein Übergang der ersten Übergangsfläche in die Wandaußenfläche zueinander axial versetzt liegen. Insbesondere kann dabei vorgesehen sein, der Übergang der ersten Übergangsfläche in die Wandaußenfläche von einem Scheitelbereich der ersten Übergangsfläche axial weiter entfernt liegt als der Übergang der ersten Übergangsfläche in die Wandinnenfläche.

Die vorliegende Erfindung betrifft ferner eine Abgasanlage für eine Brennkraftmaschine, umfassend einen erfindungsgemäß aufgebauten Mischer.

Dabei kann ein Abgasrohr an der Wandinnenfläche der Rohrverbindungswand anliegend mit der Rohrverbindungswand vorzugsweise durch Verschweißen verbunden sein.

Um auch bei mit der Rohrverbindungswand an der Wandinnenfläche anliegend verbundenem Abgasrohr eine radiale Bewegung der Mischerkörper-Tragewand zu ermöglichen, wird vorgeschlagen, dass ein radialer Abstand zwischen der Wandinnenfläche der Rohrverbindungswand und der Wandaußenfläche der Mischerkörper-Tragewand größer ist als, vorzugsweise wenigstens doppelt so groß ist wie, eine Wanddicke des mit der Rohrverbindungswand verbundenen Abgasrohrs.

Die Erfindung wird nachfolgend mit Bezug auf die beiliegenden Figuren detailliert beschrieben. Es zeigt:
- Fig. 1: eine perspektivische Längsschnittansicht eines erfindungsgemäß aufgebauten Mischers;
- Fig. 2: eine vergrößerte Detailansicht des Mischers der Fig. 1;
- Fig. 3: eine Längsschnittansicht eines einen Mischer der Fig. 1 enthaltenden Teils einer Abgasanlage einer Brennkraftmaschine.

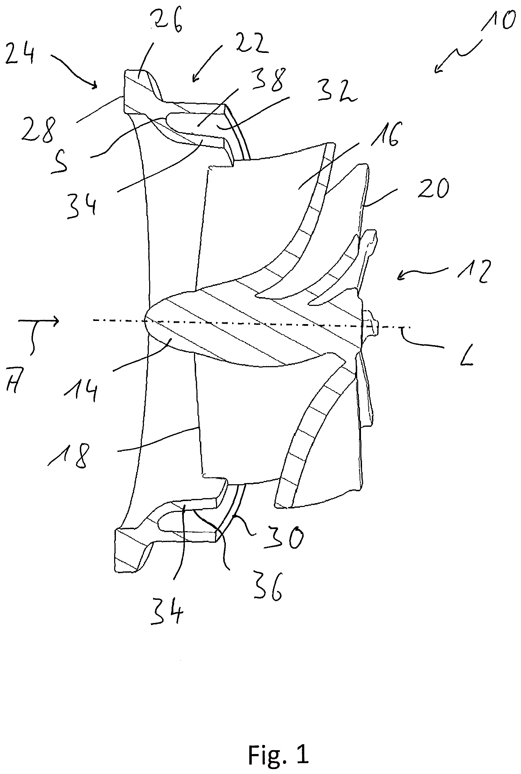

In Fig. 1 ist ein Mischer für eine Abgasanlage einer Brennkraftmaschine allgemein mit 10 bezeichnet. Der Mischer 10 umfasst einen Mischerkörper 12 mit einem beispielsweise bezüglich einer Mischerlängsachse L zentrisch angeordneten Mischerkörperzentrum 14 und einer Mehrzahl von von dem Mlscherkörperzentrum 14 ausgehenden bzw. im Bereich des Mischerkörperzentrums 14 aneinander anschließenden schaufelartigen Strömungsablenkelementen 16. Die in Richtung stromaufwärts orientierten Anströmkanten 18 und die in Richtung stromabwärts bzw. in Umfangsrichtung orientierten Abströmkanten 20 der Strömungsablenkelemente 16 sind in Umfangsrichtung zueinander versetzt, so dass das in einer Abgasströmungsrichtung A auf den Mischer 10 zu strömende und mit Reaktionsmittel durchsetzte Abgas beim Durchströmen des Mischers 10 bzw. des Mischerkörpers 12 in Umfangsrichtung abgelenkt und dabei verwirbelt wird. In der so erzeugten Drallströmung wird eine effiziente Durchmischung des Abgases mit dem in dieses eingespritzten Reaktionsmittel erreicht. Ferner tragen die durch den Abgasstrom erwärmten Oberflächen der Strömungsablenkelemente 16 dazu bei, die Abdampfung von in Tröpfchenform auf diese auftreffendem Reaktionsmittel zu unterstützen.

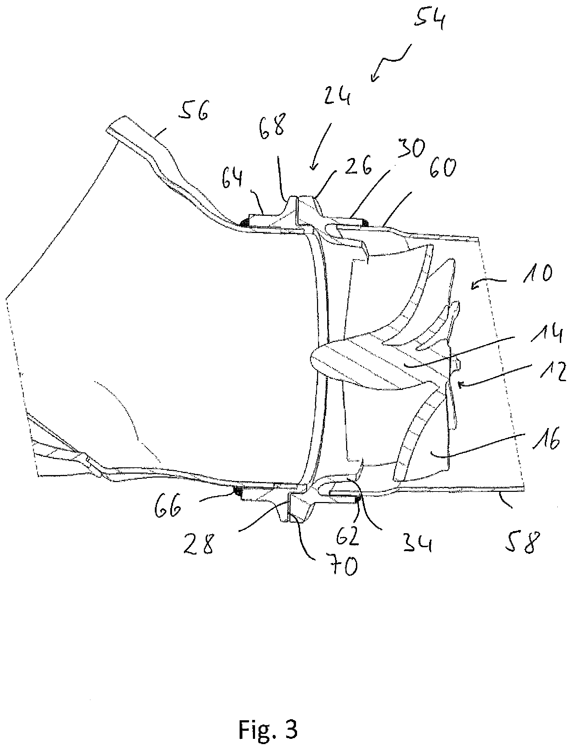

Radial außen schließen die Strömungsablenkelemente 16 an einen allgemein mit 22 bezeichneten Trägerbereich des Mischers 10 an. Der Trägerbereich 22 umgibt die Mischerlängsachse L ringartig, bildet also einen in Umfangsrichtung geschlossenen Ring. Zu der nachfolgend mit Bezug auf die Fig. 3 detailliert beschriebenen Verbindung des Mischers 22 mit einer stromaufwärts bezüglich diesem positionierten Abgasanlagenkomponente weist der Trägerbereich 22 einen Mischerverbindungsbereich 24 auf. Der Mischerverbindungsbereich 24 ist mit einem nach radial außen vorspringenden Verbindungsflansch 26 und einer an diesem vorgesehenen und im Wesentlichen axial orientierten Anlagefläche 28 ausgebildet. Mit der Anlagefläche 28 kann der Mischerverbindungsbereich 24 zur Anlage an der stromaufwärts an den Mischer 10 anschließend zu positionierenden Abgasanlagenkomponente positioniert werden.

Anschließend an den Mischerverbindungsbereich 24 umfasst der Trägerbereich 22 eine im Wesentlichen in Richtung der Mischerlängsachse L sich erstreckende Rohrverbindungswand 30. Mit der Rohrverbindungswand 30 kann eine mit dem Mischer 10 fest zu verbindende und somit stromabwärts an diesen anschließende Abgasanlagenkomponente, insbesondere ein Abgasrohr, verbunden werden. Dazu stellt die Rohrverbindungswand 30 eine im Wesentlichen als Zylinderfläche ausgebildete Wandinnenfläche 32 bereit, an welcher das mit dem Trägerbereich 22 fest zu verbindende Abgasrohr anliegend positioniert werden kann.

Der Trägerbereich 22 umfasst ferner eine an den Mischerverbindungsbereich 24 bzw. auch die Rohrverbindungswand 30 anschließende Mischerkörper-Tragewand 34. An die Mischerkörper-Tragewand 34 schließen die Strömungsablenkelemente 16 des Mischerkörpers 12 im Bereich ihrer Anströmkanten 18 an. Es ist darauf hinzuweisen, dass der gesamte Mischer 10 mit seinem Trägerbereich 22 und seinem Mischerkörper 12 als integrales Metallgussteil, also ein Metallblock, hergestellt werden kann. Sofern erforderlich, können anschließend an einen derartigen Gießherstellungsvorgang noch materialabhebende Bearbeitungsschritte vorgenommen werden, beispielsweise um die Anlagefläche 28 zur Herstellung einer gasdichten Verbindung vollkommen plan zu gestalten.

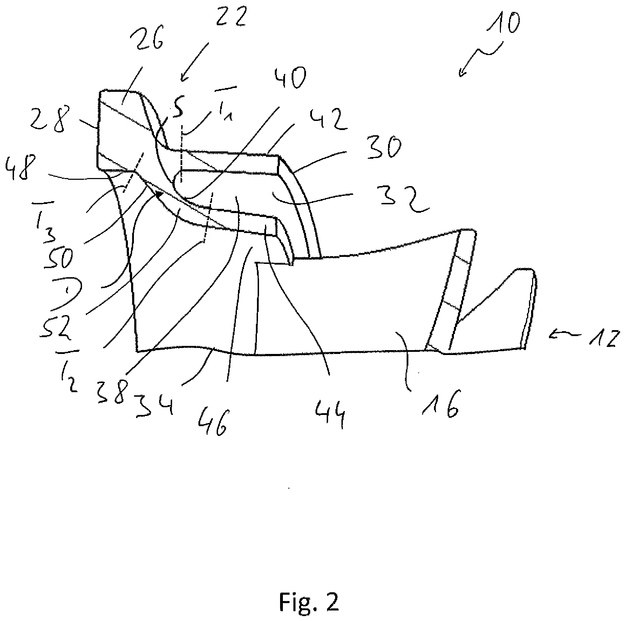

Die Mischerkörper-Tragewand 34 stellt eine nach radial außen orientierte Wandaußenfläche 36 bereit. Zwischen der Wandinnenfläche 32 der Rohrverbindungswand 30 und der Wandaußenfläche 36 der Mischerkörper-Tragewand 34 ist ein in Richtung stromabwärts offener Rohraufnahmezwischenraum 38 gebildet. Dieser ist in Richtung stromaufwärts durch eine im Wesentlichen an der Mischerkörper-Tragewand 34 ausgebildete erste Übergangsfläche 40 abgeschlossen. Die erste Übergangsfläche 40 schließt im Bereich einer in Fig. 2 dargestellten Trennlinie T₁ an die Wandinnenfläche 32 an und schließt im Bereich einer in Fig. 2 dargestellten Trennlinie T₂ an die Wandaußenfläche 36 an. Die Rohrverbindungswand 30 weist, ausgehend von der Trennlinie T₁ bis zu ihrem vom Mischerverbindungsbereich 24 entfernten axialen Endbereich eine im Wesentlichen konstante Wanddicke auf, weist in diesem Bereich also eine als Zylinderfläche ausgebildete Außenumfangsfläche 42 auf. Gleichermaßen ist die Mischerkörper-Tragewand 34 ausgehend von der Trennlinie T₂ mit im Wesentlichen konstanter Wanddicke ausgebildet. Man erkennt, dass der radiale Abstand zwischen der Rohrverbindungswand 30 und der Mischerkörper-Tragewand 34, im Wesentlichen also auch der radiale Abstand zwischen der Wandinnenfläche 32 und der Wandaußenfläche 36 in Richtung von der ersten Übergangsfläche 40 weg zunimmt. Um dies zu erreichen, kann beispielsweise ein im Wesentlichen auch die Wandaußenfläche bereitstellender erster Tragewandbereich 44 der Mischerkörper-Tragewand 34 sich konisch verjüngend ausgebildet sein, so dass die Wandaußenfläche 36 und gleichermaßen eine Innenumfangsfläche 46 des ersten Tragewandbereichs 44 als Kegelstumpfflächen ausgebildet sind.

An eine Innenumfangsfläche 48 des Mischerverbindungsbereichs 24 schließt im Bereich einer Trennlinie T₃ eine beispielsweise bis zur Trennlinie T₂ sich erstreckende zweite Übergangsfläche 50 an. Diese im Wesentlichen nach radial innen orientierte zweite Übergangsfläche 50 ist an einem zweiten Tragewandbereich 52 der Mischerkörper-Tragewand 34 vorgesehen und ist so gestaltet, dass sie in keinem ihrer zwischen den beiden Trennlinien T₃ und T₂ liegenden Bereiche eine zur Mischerlängsachse L parallele Flächennormale aufweist. Das heißt, an jeder Stelle der zweiten Übergangsfläche 50 weist deren Flächennormale eine in radialer Richtung bezüglich der Mischerlängsachse L orientierte Erstreckungskomponente auf. Dadurch werden stufenartige Übergänge mit radial sich erstreckenden Flächenbereichen zwischen der beispielsweise ebenfalls als Zylinderfläche ausgebildeten Innenumfangsfläche 48 des Mischerverbindungsbereichs 24 und der Innenumfangsfläche 46 des ersten Tragewandbereichs 44 vermieden. Es ergibt sich ein geschwungener, stufenfreier Übergang, durch welchen das mit Reaktionsmittel durchsetzte Abgas auch im radial äußeren Bereich ohne wesentlichen Strömungswiderstand in Richtung auf die Strömungsablenkelemente 16 zu geleitet wird.

Bei dem Mischer 10 ist die erste Übergangsfläche 40 zwischen dem Bereich, in welchem sie an der Trennlinie T₁ an die Wandinnenfläche 32 anschließt, und dem Bereich, in welchem sie an der Trennlinie T₂ an die Wandaußenfläche 36 anschließt, durchgehend konkav gewölbt, so dass der zweite Tragewandbereich 52 mit dieser konkav gewölbten ersten Übergangsfläche 40 einen entsprechend konkav gewölbten, in Umfangsrichtung um die Mischerlängsachse L ringartig umlaufenden Bodenbereich des Rohraufnahmezwischenraums 38 bildet. Ferner ist bei einer besonders vorteilhaften Ausgestaltung die erste Übergangsfläche 40 so gestaltet, dass bei deren konkaver Gestalt der Krümmungsradius ausgehend von der Trennlinie T₁, also dem Bereich, in welchem die erste Übergangsfläche 40 an die Wandinnenfläche 32 anschließt, bis zu demjenigen Bereich, in welchem an der Trennlinie T₂ die erste Übergangsfläche 40 an die Wandaußenfläche 36 anschließt, zunimmt. Die Zunahme kann besonders vorteilhaft stetig sein, so dass zwischen den Trennlinien T₁ und T₂ im Wesentlichen kein Bereich mit konstantem oder abnehmendem Krümmungsradius vorhanden ist. In Verbindung mit der Formgebung der zweiten Übergangsfläche 50 ergibt sich somit für den zweiten Tragewandbereich 52 eine ausgehend von der Trennlinie T₂, also dem Anschluss an den ersten Tragewandbereich 44, zunehmende Wanddicke bis zu demjenigen Bereich, in welchem der zweite Tragewandbereich 52 an den Mischerverbindungsbereich 24 bzw. die Rohrverbindungswand 30 anschließt. Dabei besteht vorzugsweise weder am Übergang des zweiten Tragewandbereich 52 zum Mischerverbindungsbereich 24 bzw. zur Innenumfangsfläche 48 desselben, noch am Übergang des zweiten Tragewandbereichs 52 zur Rohrverbindungswand 30 bzw. zur Wandinnenfläche 32 derselben ein knickartiger bzw. stufenartiger Übergang. Ferner liegt der Bereich, in welchem an der Linie T₂ die erste Übergangsfläche 40 in die Wandaußenfläche 36 übergeht, axial versetzten bezüglich des Bereichs, in welchem an der Linie T₁ die erste Übergangsfläche 40 in die Wandinnenfläche 32 übergeht, und zwar derart, dass der Übergang an der Linie T₂ axial weiter entfernt von einem Scheitelbereich S der ersten Übergangsfläche 40 liegt, als der Übergang an der Linie T₁. Dadurch wird ein allmählicher, stufen- bzw. knickfreier Übergang der ersten Übergangsfläche 40 in die Wandaußenfläche 36 unterstützt. Es ist darauf hinzuweisen, dass der Scheitelbereich S der ersten Übergangsfläche 40 derjenige Bereich ist, in welchem diese einen maximalen Abstand zu den in Fig. 2 rechts erkennbaren axialen Endflächen der Rohrverbindungswand 30 bzw. der Mischerkörper-Tragewand 34 aufweist.

In Fig. 1 ist deutlich zu erkennen, dass die Strömungsablenkelemente 16 derart an die Mischerkörper-Tragewand 34 anschließen, dass deren am weitesten stromaufwärts orientierten Bereiche, also die Anströmkanten 18, in axialem Abstand zur ersten Übergangsfläche 40 liegen, insbesondere zu demjenigen Bereich, in welchem diese an der Trennlinie T₂ in die Wandaußenfläche 36 übergeht. Bei der Umströmung des Mischers 10 mit dem von einer Brennkraftmaschine ausgestoßenen heißen Abgas wird der Mischerkörper 12 sich thermisch ausdehnen. Dieser thermischen Ausdehnung kann aufgrund der Formgebung des Trägerbereichs 22 einerseits und aufgrund des zur ersten Übergangsfläche 40 axial versetzten Anschlusses der Strömungsablenkelemente 16 an die Mischerkörper-Tragewand 34 andererseits die Mischerkörper-Tragewand 34 dieser radialen Ausdehnung des Mischerkörpers 12 folgen. Dabei bildet der zweite Tragewandbereich 52 im Wesentlichen im Bereich D desselben einen Dreh- bzw. Gelenkpunkt. Da in keinem Bereich der verschiedenen ineinander übergehenden Flächen Ecken, Kanten oder Stufen vorhanden sind, wird das Entstehen übermäßig großer lokaler Spannung bei der radialen Ausdehnung des Mischerkörpers 12 auf diese Art und Weise vermieden. Ferner wird aufgrund des vergleichsweise großen radialen Abstandes zwischen der Rohrverbindungswand 30 und der Mischerkörper-Tragewand 34 diese radiale Ausdehnungsbewegung nicht durch irgendwelche Abschnitte des Trägerbereichs 22 beeinträchtigt.

Die Fig. 3 zeigt die Integration des Mischers 10 in eine allgemein mit 54 bezeichnete Abgasanlage einer Brennkraftmaschine. Diese Abgasanlage 54 umfasst ein stromaufwärtiges Abgasrohr 56, in dessen Bereich beispielsweise ein zum Einspritzen des Reaktionsmittels vorgesehener Injektor angeordnet sein kann. Die Abgasanlage 54 umfasst ferner ein stromabwärtiges Abgasrohr 58, das mit einem beispielsweise radial etwas aufgeweiteten Endbereich 60 in den Rohraufnahmezwischenraum 38 des Mischers 10 derart eingesetzt ist, dass es an der Wandinnenfläche 32 anliegt. Durch eine in Umfangsrichtung vorzugsweise umlaufende Schweißnaht 62 ist das Abgasrohr 58 mit der Rohrverbindungswand 30 materialschlüssig verbunden.

An dem stromaufwärts bezüglich des Mischers 10 positionierten Abgasrohr 56 ist ein zum Rohrverbindungsbereich 24 des Mischers 10 komplementär geformtes Verbindungselement 64 beispielsweise durch eine Schweißnaht 66 festgelegt. Das Verbindungselement 64 weist einen zu dem nach radial außen über die Rohrverbindungswand 30 vorspringenden Flanschbereich 26 des Mischerverbindungsbereichs 24 komplementären Flanschbereich 68 auf. Der Flanschbereich 26 ist mit seiner Anlagefläche 28 einer Anlagefläche 70 des Flanschbereichs 68 gegenüberliegend positioniert, wobei beispielsweise zwischen diesen beiden Anlageflächen 28, 70 ein ringartiges Dichtungselement positioniert werden kann. Zur festen Verbindung kann eine die beiden Flanschbereiche 26, 68 radial außen umgebende und diese auch radial übergreifende Rohrschelle oder dergleichen vorgesehen werden, durch welche ein gasdichter, fester Zusammenhalt des Mischerverbindungsbereichs 24 mit dem Verbindungselement 64 erreicht wird. Bei einer alternativen Ausgestaltung können beispielsweise Schraubbolzen durch die beiden Flanschbereiche 26, 68 hindurchgeführt werden, um einen stabilen Zusammenhalt zu gewährleisten.

Mit dem vorangehend beschriebenen Aufbau eines Mischers wird bei der Möglichkeit, diesen mit all seinen Systembereichen als integrales, also einstückiges bzw. aus einem Materialblock geformtes Bauteil bereitzustellen, eine Formgebung erreicht, welche eine thermische Ausdehnung des Mischerkörpers ermöglicht, ohne dass dabei lokal übermäßig große Spannungen entstehen. Somit führt auch eine über die Betriebslebensdauer eines derartigen Mischers auftretende große Anzahl an Ausdehnzyklen nicht zu der Gefahr, dass im Bereich lokal großer Spannungen Risse entstehen, welche ein Loslösen des Mischerkörpers vom Trägerbereich zur Folge haben könnten.

Es ist darauf hinzuweisen, dass bei dem vorangehend beschriebenen und in den Figuren dargestellten Mischer verschiedenste Variationen möglich sind, ohne von dem vorangehend beschriebenen wesentlichen Aufbauprinzip dieses Mischers abzuweichen. So ist es beispielsweise möglich, die Innenumfangsfläche des Mischerverbindungsbereichs nicht nach radial innen bezüglich der Wandinnenfläche versetzt anzuordnen, sondern beispielsweise auf gleichem radialen Niveau oder nach radial außen versetzt bezüglich dieser. Auch kann die erste Übergangsfläche bei Beibehalt des Prinzips einer durchlaufend konkaven Formgebung zwischen den Bereichen, in welchen diese an die Wandinnenfläche und die Wandaußenfläche anschließt, lokal beispielsweise mit konstantem Krümmungsradius ausgebildet sein, oder es könnte, beispielsweise ausgehend von dem Bereich, in welchem die erste Übergangsfläche an die Wandinnenfläche anschließt, zunächst der Krümmungsradius der ersten Übergangsfläche abnehmen, beispielsweise bis nahe an oder zu dem Scheitelbereich der ersten Übergangsfläche, um dann in Richtung zur Wandaußenfläche wieder zuzunehmen. Auch können selbstverständlich die Strömungsablenkelemente mit von der dargestellten Formgebung abweichender Formgebung bzw. Positionierung auch bezüglich des Mischerkörperzentrums angeordnet sein.

## Patentansprüche

1. Mischer für eine Abgasanlage einer Brennkraftmaschine, umfassend einen Mischerkörper (12) mit einer Mehrzahl von von einem Mischerkörperzentrum (14) bezüglich einer Mischerlängsachse (L) nach radial außen sich erstreckenden Strömungsablenkelementen (16) sowie einen an den Mischerkörper (12) radial außen anschließenden, die Mischerlängsachse (L) ringartig umgebenden Trägerbereich (22), wobei der Trägerbereich (22) umfasst:
- einen Mischerverbindungsbereich (24) zum Verbinden des Mischers (10) mit einer an den Mischer (10) angrenzend zu positionierenden Abgasanlagenkomponente,
- eine an den Mischerverbindungsbereich (24) anschließende Rohrverbindungswand (30) mit einer Wandinnenfläche (32),
- eine an den Mischerverbindungsbereich (24) anschließende, den Mischerkörper (12) tragende und von der Rohrverbindungswand (30) radial außen umgebene Mischerkörper-Tragewand (34) mit einer Wandaußenfläche (36) **gekennzeichnet durch**
- eine an die Wandaußenfläche (36) und die Wandinnenfläche (32) anschließende erste Übergangsfläche (40), wobei die erste Übergangsfläche (40) zwischen der Wandinnenfläche (32) und der Wandaußenfläche (36) durchgehend konkav gewölbt ist und einen zwischen der Rohrverbindungswand (30) und der Mischerkörper-Tragewand (34) gebildeten ringartigen Rohraufnahmezwischenraum (38) axial begrenzt.

2. Mischer nach Anspruch 1, **dadurch gekennzeichnet, dass** ein Krümmungsradius der konkav gewölbten ersten Übergangsfläche (40) vom Anschluss der ersten Übergangsfläche (40) an die Wandinnenfläche (32) zum Anschluss der ersten Übergangsfläche (40) an die Wandaußenfläche (36) zunimmt.

3. Mischer nach Anspruch 1 oder 2, **dadurch gekennzeichnet, dass** ein radialer Abstand der Wandaußenfläche (36) zur Wandinnenfläche (32) in Richtung zu einem von der ersten Übergangsfläche (40) entfernten axial offenen Ende des Rohraufnahmezwischenraums (38) zunimmt.

4. Mischer nach einem der vorangehenden Ansprüche, **dadurch gekennzeichnet, dass** die Wandinnenfläche (32) eine Zylinderfläche ist, oder/und dass die Wandaußenfläche (36) eine Kegelstumpffläche ist.

5. Mischer nach einem der vorangehenden Ansprüche, **dadurch gekennzeichnet, dass** im axialen Erstreckungsbereich der Wandinnenfläche (32) die Rohrverbindungswand (30) eine im Wesentlichen konstante Wanddicke aufweist.

6. Mischer nach einem der vorangehenden Ansprüche, **dadurch gekennzeichnet, dass** die Mischerkörper-Tragewand (34) einen an einer radialen Außenseite die Wandaußenfläche (36) bereitstellenden ersten Tragewandbereich (44) und einen an den ersten Tragewandbereich (44) anschließenden und wenigstens einen Teil der ersten Übergangsfläche (40) bereitstellenden zweiten Tragewandbereich (52) aufweist, und dass die Mischerkörper-Tragewand (34) im ersten Tragewandbereich (44) eine konstante Wanddicke aufweist oder/und im zweiten Tragewandbereich (52) eine in Richtung vom ersten Tragewandbereich (44) weg zunehmende Wanddicke aufweist.

7. Mischer nach Anspruch 6, **dadurch gekennzeichnet, dass** die Mischerkörper-Tragewand (34) im zweiten Tragewandbereich (52) an ihrer von der ersten Übergangsfläche (40) abgewandten Seite eine an eine Innenumfangsfläche (48) des Mischerverbindungsbereichs (24) und eine Innenumfangsfläche (46) des ersten Tragewandbereichs (44) anschließende zweite Übergangsfläche (50) aufweist, und dass die zweite Übergangsfläche (50) in ihrem Erstreckungsbereich zwischen der Innenumfangsfläche (48) des Mischerverbindungsbereichs (24) und der Innenumfangsfläche (46) des ersten Tragewandbereichs (44) keine zur Mischerlängsachse (L) parallele Flächennormale aufweist oder/und ein Radialabstand der zweiten Übergangsfläche (50) zur Mischerlängsachse (L) in ihrem Erstreckungsbereich zwischen der Innenumfangsfläche (48) des Mischerverbindungsbereichs (24) und der Innenumfangsfläche (46) des ersten Tragewandbereichs (44) stufenlos abnimmt oder/und ein Radialabstand der Innenumfangsfläche (46) des ersten Tragewandbereichs (42) zur Mischerlängsachse (L) axial in Richtung von der zweiten Übergangsfläche (50) weg abnimmt.

8. Mischer nach Anspruch 7, **dadurch gekennzeichnet, dass** die Innenumfangsfläche (48) des Mischerverbindungsbereichs (24) eine Zylinderfläche ist, oder/und dass Innenumfangsfläche (48) des Mischerverbindungsbereichs (24) und die Wandinnenfläche (32) zueinander radial versetzt angeordnet sind, oder/und dass die Innenumfangsfläche (46) des ersten Tragewandbereichs (44) eine Kegelstumpffläche ist.

9. Mischer nach einem der vorangehenden Ansprüche, **dadurch gekennzeichnet, dass** der Mischerverbindungsbereich (24) einen nach radial außen über die Rohrverbindungswand (30) vorspringenden Verbindungsflansch (26) mit einer im Wesentlichen axial orientierten Anlagefläche (28) zur Anlage einer angrenzend an den Mischer (10) zu positionierenden Abgasanlagenkomponente aufweist.

10. Mischer nach einem der vorangehenden Ansprüche, **dadurch gekennzeichnet, dass** der Trägerbereich (22) mit seinem Mischerverbindungsbereich (24), seiner Rohrverbindungswand (30) und seiner Mischerkörper-Tragewand (34) und der Mischerkörper (12) mit seinem Mischerkörperzentrum (14) und seinen Strömungsablenkelementen (16) als integrales Metallgussteil ausgebildet sind.

11. Mischer nach einem der vorangehenden Ansprüche, **dadurch gekennzeichnet, dass** wenigstens ein Teil der Strömungsablenkelemente (16) mit axialem Abstand zur ersten Übergangsfläche (40) an die Mischerkörper-Tragewand (34) anschließt.

12. Mischer nach einem der vorangehenden Ansprüche, **dadurch gekennzeichnet, dass** ein Übergang der ersten Übergangsfläche (40) in die Wandinnenfläche (32) und ein Übergang der ersten Übergangsfläche (40) in die Wandaußenfläche (36) zueinander axial versetzt liegen, vorzugsweise wobei der Übergang der ersten Übergangsfläche (40) in die Wandaußenfläche (36) von einem Scheitelbereich (S) der ersten Übergangsfläche (40) axial weiter entfernt liegt als der Übergang der ersten Übergangsfläche (40) in die Wandinnenfläche (32).

13. Abgasanlage für eine Brennkraftmaschine, umfassend einen Mischer (10) nach einem der vorangehenden Ansprüche.

14. Abgasanlage nach Anspruch 13, **dadurch gekennzeichnet, dass** ein Abgasrohr (58) an der Wandinnenfläche (32) der Rohrverbindungswand (30) anliegend mit der Rohrverbindungswand (30) vorzugsweise durch Verschweißen verbunden ist.

15. Abgasanlage nach Anspruch 14, **dadurch gekennzeichnet, dass** ein radialer Abstand zwischen der Wandinnenfläche (32) der Rohrverbindungswand (30) und der Wandaußenfläche (36) der Mischerkörper-Tragewand (34) größer ist als, vorzugsweise wenigstens doppelt so groß ist wie, eine Wanddicke des mit der Rohrverbindungswand (30) verbundenen Abgasrohrs (58).

## Claims

1. Mixer for an exhaust system of an internal combustion engine, comprising a mixer body (12) with a plurality of flow deflection elements (16) extending radially outwards from a mixer body center (14) in relation to a mixer longitudinal axis (L) as well as a carrier area (22), which adjoins the mixer body (12) radially on the outside and encloses the mixer longitudinal axis (L) in a ring-like manner, the carrier area (22) comprising:
- a mixer connection area (24) for connecting the mixer (10) to an exhaust system component to be positioned adjoining the mixer (10),
- a pipe connection wall (30) with a wall inner surface (32), which pipe connection wall adjoins the mixer connection area (24);
- a mixer body carrier wall (34) with a wall outer surface (36), which mixer body carrier wall adjoins the mixer connection area (24), carries the mixer body (12) and is enclosed by the pipe connection wall (30) radially on the outside, **characterized by**
- a first transition surface (40), which adjoins the wall outer surface (36) and the wall inner surface (32), wherein the first transition surface (40) is arched continuously concavely between the wall inner surface (32) and the wall outer surface (36) and axially defines a ring-like pipe-mounting intermediate space (38) formed between the pipe connection wall (30) and the mixer body carrier wall (34).

2. Mixer in accordance with claim 1, **characterized in that** a radius of curvature of the concavely arched first transition surface (40) increases from the junction of the first transition surface (40) to the wall inner surface (32) to the junction of the first transition surface (40) to the wall outer surface (36).

3. Mixer in accordance with claim 1 or 2, **characterized in that** a radial distance of the wall outer surface (36) to the wall inner surface (32) increases in the direction of an axially open end of the pipe-mounting intermediate space (38), which end is located at a distance from the first transition surface (40).

4. Mixer in accordance with one of the preceding claims, **characterized in that** the wall inner surface (32) is a cylindrical surface, or/and that the wall outer surface (36) is a frustoconical surface.

5. Mixer in accordance with one of the preceding claims, **characterized in that** the pipe connection wall (30) has an essentially constant wall thickness in the area in which the wall inner surface (32) extends axially.

6. Mixer in accordance with one of the preceding claims, **characterized in that** the mixer body carrier wall (34) has a first carrier wall area (44) forming the wall outer surface (36) on a radial outer side and a second carrier wall area (52), which adjoins the first carrier wall area (44) and forms at least a part of the first transition surface (40), and that the mixer body carrier wall (34) has a constant wall thickness in the first carrier wall area (44) or/and has a wall thickness increasing in the direction away from the first carrier wall area (44) in the second carrier wall area (52).

7. Mixer in accordance with claim 6, **characterized in that** in the second carrier wall area (52), the mixer body carrier wall (34) has, on its side facing away from the first transition surface (40), a second transition surface (50) adjoining an inner circumferential surface (48) of the mixer connection area (24) and an inner circumferential surface (46) of the first carrier wall area (44), and that the second transition surface (50) has no surface normal parallel to the mixer longitudinal axis (L) in its area in which it extends between the inner circumferential surface (48) of the mixer connection area (24) and the inner circumferential surface (46) of the first carrier wall area (44) or/and a radial distance of the second transition surface (50) to the mixer longitudinal axis (L) decreases continuously in its area in which it extends between the inner circumferential surface (48) of the mixer connection area (24) and the inner circumferential surface (46) of the first carrier wall area (44) or/and a radial distance of the inner circumferential surface (46) of the first carrier wall area (42) to the mixer longitudinal axis (L) decreases in the direction away from the second transition surface (50).

8. Mixer in accordance with claim 7, **characterized in that** the inner circumferential surface (48) of the mixer connection area (24) is a cylindrical surface, or/and that the inner circumferential surface (48) of the mixer connection area (24) and the wall inner surface (32) are arranged radially offset in relation to one another, or/and that the inner circumferential surface (46) of the first carrier wall area (44) is a frustoconical surface.

9. Mixer in accordance with one of the preceding claims, **characterized in that** the mixer connection area (24) has a connection flange (26) protruding radially outwards over the pipe connection wall (30) with an essentially axially oriented contact surface (28) for contacting an exhaust system component to be positioned adjoining the mixer (10).

10. Mixer in accordance with one of the preceding claims, **characterized in that** the carrier area (22) with its mixer connection area (24), with its pipe connection wall (30) and with its mixer body carrier wall (34) and the mixer body (12) with its mixer body center (14) and with its flow deflection elements (16) are configured as an integral cast metal part.

11. Mixer in accordance with one of the preceding claims, **characterized in that** at least some of the flow deflection elements (16) adjoin the mixer body carrier wall (34) with an axial distance to the first transition surface (40).

12. Mixer in accordance with one of the preceding claims, **characterized in that** a transition of the first transition surface (40) into the wall inner surface (32) and a transition of the first transition surface (40) into the wall outer surface (36) are located axially offset in relation to one another, preferably wherein the transition of the first transition surface (40) into the wall outer surface (36) is located axially at a greater distance from an apex area (S) of the first transition surface (40) than the transition of the first transition surface (40) into the wall inner surface (32).

13. Exhaust system for an internal combustion engine, comprising a mixer (10) in accordance with one of the preceding claims.

14. Exhaust system in accordance with claim 13, **characterized in that** an exhaust gas pipe (58) located adjoining the wall inner surface (32) of the pipe connection wall (30) is connected to the pipe connection wall (30) preferably by welding.

15. Exhaust system in accordance with claim 14, **characterized in that** a radial distance between the wall inner surface (32) of the pipe connection wall (30) and the wall outer surface (36) of the mixer body carrier wall (34) is greater than and preferably twice as great as a wall thickness of the exhaust gas pipe (58) connected to the pipe connection wall (30).

## Revendications

1. Mélangeur pour un système d'échappement d'un moteur à combustion interne, comprenant un corps de mélangeur (12) avec une pluralité d'éléments de déviation de flux (16) s'étendant radialement vers l'extérieur à partir d'un centre de corps de mélangeur (14) par rapport à un axe longitudinal de mélangeur (L) ainsi qu'une zone de support (22), qui se raccorde radialement à l'extérieur au corps de mélangeur (12) et qui entoure l'axe longitudinal de mélangeur (L) de manière annulaire, la zone de support (22) comprenant :
- une zone de raccordement de mélangeur (24) pour le raccordement du mélangeur (10) à un composant du système d'échappement qui doit être placé adjacent au mélangeur (10),
- une paroi de raccordement de tuyau (30) avec une surface intérieure de la paroi (32), lequel paroi de raccordement de tuyau rejoint la zone de raccordement de mélangeur (24),
- une paroi de support de corps de mélangeur (34) avec une surface extérieure de la paroi (36), lequel paroi de support de corps de mélangeur rejoint la zone de raccordement de mélangeur (24), porte le corps de mélangeur (12) et est entourée par la paroi de raccordement de tuyau (30) radialement à l'extérieur, **caractérisée par**
- une première surface de transition (40), qui rejoint la surface extérieure de la paroi (36) et la surface intérieure de la paroi (32), la première surface de transition (40) étant incurvée de manière essentiellement concave et continue entre la surface intérieure de la paroi (32) et la surface extérieure de la paroi (36) et définissant axialement un espace intermédiaire de montage de tube (38) annulaire formé entre la paroi de raccordement de tube (30) et la paroi de support de corps de mélangeur (34).

2. Mélangeur selon la revendication 1, **caractérisé en ce qu'**un rayon de courbure de la première surface de transition (40) à courvature concave augmente de la jonction de la première surface de transition (40) à la surface intérieure de la paroi (32) jusqu'à la jonction de la première surface de transition (40) à la surface extérieure de la paroi (36).

3. Mélangeur selon la revendication 1 ou 2, **caractérisé en ce qu'**une distance radiale de la surface extérieure de la paroi (36) à la surface intérieure de la paroi (32) augmente dans la direction d'une extrémité axialement ouverte de l'espace intermédiaire de montage du tuyau (38) située à une distance de la première surface de transition (40).

4. Mélangeur selon l'une des revendications précédentes, **caractérisé en ce que** la surface intérieure de la paroi (32) est une surface cylindrique, ou/et que la surface extérieure de la paroi (36) est une surface tronconique.

5. Mélangeur selon l'une des revendications précédentes, **caractérisé en ce que** la paroi de raccordement de tuyau (30) a une épaisseur de paroi essentiellement constante dans la zone dans laquelle la surface intérieure de la paroi (32) s'étend axialement.

6. Mélangeur selon l'une des revendications précédentes, **caractérisé en ce que** la paroi de support de corps de mélangeur (34) présente une première zone de la paroi de support (44) formant la surface extérieure de la paroi (36) sur un côté extérieur radial et une deuxième zone de la paroi de support (52), qui se raccorde à la première zone de la paroi de support (44) et forme au moins une partie de la première surface de transition (40), et que la paroi de support de corps de mélangeur (34) a une épaisseur de la paroi constante dans la première zone de la paroi de support (44) ou/et qu'elle a une épaisseur de paroi qui augmente dans la direction qui s'éloigne de la première zone de la paroi de support (44) dans la deuxième zone de la paroi de support (52).

7. Mélangeur selon la revendication 6, **caractérisé en ce que** dans la deuxième zone de la paroi de support (52), la paroi de support de corps de mélangeur (34) présente, sur son côté opposé à la première surface de transition (40), une deuxième surface de transition (50) qui se raccorde à une surface circonférentielle intérieure (48) de la zone de raccordement de mélangeur (24) et à une surface circonférentielle intérieure (46) de la première zone de la paroi de support (44), et que la deuxième surface de transition (50) ne présente pas de surface normale parallèle à l'axe longitudinal (L) du mélangeur dans sa zone dans laquelle elle s'étend entre la surface circonférentielle intérieure (48) de la zone de raccordement de mélangeur (24) et la surface circonférentielle intérieure (46) de la première zone de la paroi de support (44) et/ou qu'une distance radiale de la deuxième surface de transition (50) par rapport à l'axe longitudinal (L) du mélangeur diminue de manière continue dans sa zone dans laquelle elle s'étend entre la surface circonférentielle intérieure (48) de la zone de raccordement du mélangeur (24) et la surface circonférentielle intérieure (46) de la première zone de la paroi de support (44) et/ou une distance radiale de la surface circonférentielle intérieure (46) de la première zone de la paroi de support (42) par rapport à l'axe longitudinal du mélangeur (L) diminue dans la direction s'éloignant de la deuxième surface de transition (50).

8. Mélangeur selon la revendication 7, **caractérisé en ce que** la surface circonférentielle intérieure (48) de la zone de raccordement de mélangeur (24) est une surface cylindrique, ou/et que la surface circonférentielle intérieure (48) de la zone de raccordement de mélangeur (24) et la surface intérieure de la paroi (32) sont disposées de manière décalée radialement l'une par rapport à l'autre, ou/et que la surface circonférentielle intérieure (46) de la première zone de la paroi de support (44) est une surface tronconique.

9. Mélangeur selon l'une des revendications précédentes, **caractérisé en ce que** la zone de raccordement de mélangeur (24) présente une bride de raccordement (26) faisant saillie radialement vers l'extérieur sur la paroi de raccordement de tuyau (30) avec une surface de contact (28) orientée essentiellement axialement pour le contact avec un composant du système d'échappement à positionner à côté du mélangeur (10).

10. Mélangeur selon l'une des revendications précédentes, **caractérisé en ce que** la zone de support (22) avec sa zone de raccordement de mélangeur (24), avec sa paroi de raccordement de tuyau (30) et avec sa paroi de support de corps de mélangeur (34) et le corps de mélangeur (12) avec son centre de corps de mélangeur (14) et avec ses éléments de déviation de flux (16) sont configurés comme une pièce métallique moulée intégrale.

11. Mélangeur selon l'une des revendications précédentes, **caractérisé en ce qu'**au moins une partie des éléments de déviation de flux (16) rejoint la paroi de support de corps de mélangeur (34) avec une distance axiale par rapport à la première surface de transition (40).

12. Mélangeur selon l'une des revendications précédentes, **caractérisé en ce qu'**une transition de la première surface de transition (40) dans la surface intérieure de la paroi (32) et une transition de la première surface de transition (40) dans la surface extérieure de la paroi (36) sont situées de manière décalée axialement l'une par rapport à l'autre, de préférence dans lequel la transition de la première surface de transition (40) dans la surface extérieure de la paroi (36) est située axialement à une plus grande distance d'une zone de sommet (S) de la première surface de transition (40) que la transition de la première surface de transition (40) dans la surface intérieure de la paroi (32).

13. Système d'échappement pour un moteur à combustion interne, comprenant un mélangeur (10) selon l'une des revendications précédentes.

14. Système d'échappement selon la revendication 13, **caractérisé en ce qu'**un tuyau de gaz d'échappement (58) situé à proximité de la surface intérieure de la paroi (32) de raccordement de tuyau (30) est relié à la paroi de raccordement de tuyau (30) de préférence par soudage.

15. Système d'échappement selon la revendication 14, **caractérisé en ce qu'**une distance radiale entre la surface intérieure de la paroi (32) de raccordement de tuyau (30) et la surface extérieure de la paroi (36) de la paroi de support de corps de mélangeur (34) est supérieure et de préférence deux fois plus grande qu'une épaisseur de la paroi du tuyau de gaz d'échappement (58) raccordé à la paroi de raccordement de tuyau (30).
